# EUROPEAN PATENT APPLICATION

(11) **EP 2 144 247 A1**
(43) Date of publication of application: **13.01.2010**
(21) Application number: 07739795.8
(22) Date of filing: 27.03.2007
(51) Int. Cl.: G11B 27/34, G06F 3/048, G11B 20/10

(54) **INFORMATION RECORDING MEDIUM AND REPRODUCING DEVICE**

(71) Applicant: Pioneer Corporation, Tokyo 153-8654 (JP)
(72) Inventor: TATENO, Minoru, Tokorozawa-shi Saitama 359-8522 (JP); YOSHIDA, Tadashi, Tokorozawa-shi Saitama 359-8522 (JP); SUZUKI, Takashi, Kawagoe-shi Saitama 350-8555 (JP)
(74) Representative: Viering, Jentschura & Partner
(86) International application number: PCT/JP2007/056357
(87) International publication number: WO 2008/117425

(57) **Abstract**

An information recording medium (100) records a plurality of streams (1021) corresponding to a respective plurality of classified devices and each including data used for selectively displaying an image of the same content and device classification information (2100) indicating each of classifications of the devices to which the respective plurality of streams are made correspond. This makes it possible to provide a display image suitable for a reproduction environment.

## Description

### Technical Field

The present invention relates to an information recording medium, such as a BD (Blu-ray Disc), and a reproducing apparatus, such as a BD player.

### Background Art

This type of information recording medium includes, for example, an information recording medium which has a management area and a data area, wherein main picture information establishing a video stream and a plurality of sub-picture information establishing a plurality of sub-picture streams are recorded in the data area, and attribute information for identifying the plurality of sub-picture streams is recorded in the management area. In the attribute information, there are added a specific code which indicates the type of languages; and an extended code which indicates a difference in text size and a difference in the content of the same language. In the data area, there is recorded the streams of the sub-picture information determined by the specific code and the extended code (refer to a patent document 1).
Patent document 1: Japanese Patent Application Laid Open No. Hei 9-231726

### Disclosure of Invention

### Subject to be Solved by the Invention

However, according to the aforementioned background art, the reproduction environment for a reproducing apparatus or the like for reproducing information on an information recording medium is not considered, and for example, if the reproduction is performed on an on-vehicle player, displayed texts and buttons on a menu screen are so small that it is hard to operate them, which is technically problematic.

In view of the aforementioned problem, for example, it is therefore an object of the present invention to provide an information recording medium and a reproducing apparatus which can provide a display image suitable for a reproduction environment.

### Means for Solving the Subject

The above object of the present invention can be achieved by a first information recording medium of the present invention, on which there are recorded: a plurality of streams each of which corresponds to respective one of a plurality of types of apparatuses and each of which is provided with data for displaying one of pictures about identical content; and apparatus type information which indicates each of the types of the apparatuses corresponding to respective one of the plurality of streams.

According to the first information recording medium of the present invention, for example, the plurality of stream are recorded, such as a sub-picture stream or a menu stream constructed to be suitable for a home-use player and a sub-picture stream or a menu stream constructed to be suitable for an on-vehicle player. Here, the stream is typically a stream including visual data such as a menu screen and subtitles; however, in parallel with them, an audio stream including audio data may be recorded.

The apparatus type information is information for identifying or managing the stream. The apparatus type information is determined for each of the plurality of streams, and it indicates the type of the apparatus corresponding to each stream. The apparatus type information is integrally recorded in a management information area or a lead-in area which is different from a data area without being packetized; however, the apparatus type information may be packetized and recorded in the data area with the stream.

The "type" or the "apparatus type" of the present invention is not limited to classification in terms of application such as home-use, on-vehicle, and portable, but may be classification associated with a display capability such as resolution, a screen size, and an aspect ratio of a display apparatus such as a monitor connected to the apparatus. Moreover, with regard to the plurality of streams, "each of which corresponds to respective one of the plurality of types of apparatuses" typically means "corresponding to it as what is recommended". For example, a stream corresponding to on-vehicle is a stream recommended for on-vehicle, and a stream corresponding to portable is a stream recommended for portable-use.

With regard to the apparatus type information, one information or a plurality of information may be determined for one stream. If the same apparatus type information is determined for the plurality of streams, the streams may be prioritized.

According to the study of the present inventors, for example, video data recorded on the information recording medium such as a BD and a DVD (Digital Versatile Disc) is designed on the assumption that it is displayed on a home-use television, and texts and the like are possibly hard to be seen on a relatively small monitor provided for an on-vehicle player, a portable player, or the like. On the other hand, there are such an information recording medium that a plurality of different text sizes of data are recorded and the text size can be changed by a user's operation and such a reproducing apparatus that has a function of enlarging one portion of a display image; however, it is found that simply changing the text size or enlarging the display image possibly deteriorates visibility and spoils beauty or possibly makes the operations significantly inconvenient

For example, the text size may be possibly changed by a manual operation to a large text size suitable for the reproduction on the on-vehicle player. In this case, however, since the manual operation is performed as a changing operation, it causes a non-negligible labor. In particular, in many situations, the changing operation is forced to be performed in the condition that small texts and buttons are displayed.

In the present invention, however, the plurality of streams each of which corresponds to respective one of the plurality of types of apparatuses are recorded. Thus, it is possible to obtain a display image having the text size and layout suitable for the reproducing apparatus and the display apparatus. Therefore, it is possible to avoid the deteriorated visibility and the spoiled beauty. In addition, in the case of a touch panel, it is possible to prevent an operational error such as hitting a wrong button. In particular, since it is unnecessary to perform the operation of changing the stream by manual scanning in the condition that small texts and buttons are displayed, a user is released from a stressful situation in practice, and it is extremely useful.

In one aspect of the first information recording medium of the present invention, each of the plurality of streams is a menu stream.

According to this aspect, the plurality of menu streams, which includes the data for a menu and corresponds to the respective plurality of types of apparatuses, are recorded. The menu is one of the portions of a user's greatest concern, such as content selection and various settings, and it is possible to improve the visibility and operability by preparing the data for the menu suitable for each apparatus in advance. In addition, the menu stream has a relatively small data amount. Thus, even if the plurality of menu streams are recorded, they have a small percentage to the entire capacity of the information recording medium, and they do not influence main content such as video data, so that it is extremely useful in practice.

In this aspect, the menu stream may include screen structure data for determining a screen structure of a menu screen, and the screen structure data may correspond to the apparatus type information associated with the menu stream.

By virtue of such construction, it is possible to increase or decrease the number of displayed options, or to change the size of buttons, in accordance with the type of the apparatus, so that it is extremely useful in practice. Specifically, for example, on the on-vehicle player having a relatively small display apparatus, the number of options is reduced, and the button size is increased. Moreover, the content of the options may be simplified.

Incidentally, the "screen structure data" is data for determining the placement, size, content, and the like of buttons and options displayed on the menu screen.

In another aspect of the first information recording medium of the present invention, data for displaying the apparatus type information as a list is further recorded.

According to this aspect, even in the case of the reproducing apparatus that does not have a function of selecting the stream suitable for the reproducing apparatus and the display apparatus on the basis of the apparatus type information, it is possible to notify a user that the plurality of streams each of which corresponds to respective one of the plurality of types of apparatuses are recorded.

The data for displaying the plurality of apparatus type information as a list is recorded such that it is firstly displayed when the information recording medium is set on the reproducing apparatus.

Incidentally, a judgment program for judging whether or not the reproducing apparatus has the function of selecting the stream suitable for the reproducing apparatus and the display apparatus on the basis of the apparatus type information may be recorded on the information recording medium. In this manner, the reproducing apparatus that has the aforementioned function can automatically select and display the stream suitable for the reproducing apparatus and the display apparatus, and the reproducing apparatus that does not have the aforementioned function can notify a user that the plurality of streams each of which corresponds to respective one of the plurality of types of apparatuses are recorded.

In another aspect of the information recording medium of the present invention, the apparatus type information at least includes information which indicates an on-vehicle player.

According to this aspect, it is possible to provide a user at least with the menu screen or the like suitable for the on-vehicle player.

The above object of the present invention can be also achieved by a first information recording medium on which there are recorded: a stream which is provided with data for displaying a main picture; a plurality of streams each of which corresponds to respective one of a plurality of types of apparatuses and each of which is provided with data for displaying one of sub-pictures about the main picture; and apparatus type information which indicates each of the types of the apparatuses corresponding to respective one of the plurality of streams.

According to the second information recording medium of the present invention, the plurality of streams each of which corresponds to respective one of the plurality of types of apparatuses and each of which is provided with the data for displaying one of the sub-pictures about the main picture are recorded. Thus, it is possible to obtain the display image having the text size and the layout suitable for the reproducing apparatus and the display apparatus. Therefore, it is possible to avoid the deteriorated visibility and the spoiled beauty.

Incidentally, the "plurality of streams" are typically a plurality of sub-picture streams recorded in parallel: for example, streams which are provided with data such as subtitles.

The above object of the present invention can be also achieved by a reproducing apparatus for performing reproduction on an information recording medium on which there are recorded: a plurality of streams each of which corresponds to respective one of a plurality of types of apparatuses and each of which is provided with data for displaying one of pictures about identical content; and apparatus type information which indicates each of the types of the apparatuses corresponding to respective one of the plurality of streams, the reproducing apparatus provided with: a storing device for storing reproducing apparatus information which indicates the type of the reproducing apparatus; a reproducing device for reproducing the apparatus type information from the information recording medium; a selecting device for selecting the stream corresponding to the type indicated by the stored reproducing apparatus information of the plurality of types, with reference to the reproduced apparatus type information; and a controlling device for controlling the reproducing device to reproduce the selected stream.

According to the reproducing apparatus of the present invention, the storing device stores the reproducing apparatus information which indicates the type of the reproducing apparatus. Incidentally, the storing device is typically a nonvolatile memory such as a flash memory; however, it may be a large-capacity memory apparatus such as a hard disk drive.

The reproducing apparatus information may be stored in manufacturing the reproducing apparatus, or it may be manually set by a user in view of the display capability of the display apparatus or the like. Alternatively, if the reproducing apparatus is provided with a library including information about a plurality of display apparatuses, a display apparatus may be automatically recognized when the display apparatus is connected, and the optimum reproducing apparatus information may be selected and stored. Moreover, if a communicating device connectable to a network is provided, the display apparatus may be automatically recognized when the display apparatus is connected, and the optimum reproducing apparatus information may be obtained and stored from a server which has a library including the information about the plurality of display apparatuses and which exists on the network.

For example, the reproducing device including an optical pickup, a servo system, and the like performs the reproduction on the information recording medium. In the operation, the reproducing device firstly reproduces the apparatus type information recorded on the information recording medium. For example, the selecting device which is a CPU (Central Processing Unit) refers to the reproduced apparatus type information, thereby selecting the stream corresponding to the type indicated by the stored reproducing apparatus information of the plurality of types.

Here, "corresponding to the type indicated by the reproducing apparatus" typically means that the apparatus type information and the reproducing apparatus information correspond to each other; however, it may include being similar or compatible. Specifically, for example, if the reproducing apparatus information indicates an on-vehicle player and the apparatus type information does not include the on-vehicle player but include a portable player, the stream recommended for portable-use may be selected.

The controlling device controls the reproducing device to reproduce the selected stream. By this, if only the apparatus type information is recorded on the information recording medium, the stream suitable for the reproducing apparatus is automatically selected and reproduced, thereby obtaining the display image having the text size and layout suitable for the reproducing apparatus and the display apparatus.

In one aspect of the reproducing apparatus of the present invention, the selecting device includes a similarity calculating device for calculating similarity which indicates how similar the plurality of types and the type indicated by the stored reproducing apparatus information are to each other, and the selecting device selects the stream corresponding to the type having the highest similarity of the calculated similarity.

According to this aspect, the similarity calculating device calculates the similarity between the plurality of types and the type indicated by the reproducing apparatus information. Here, the "similarity" of the present invention only needs to indicate how similar they are, directly or indirectly, and it is so-called similarity in a broad sense. Thus, not only the so-called "similarity" or "similarity in a narrow sense" but also a so-called "likelihood" or "distance scale" are one example of the "similarity" of the present invention. In the similarity, what coincide with each other are set to 100, and what have a larger difference are set to be closer to 0.

The selecting device selects the stream corresponding to the type having the highest similarity of the calculated similarity. Incidentally, if the similarity is calculated by Euclidean square distance or Mahalanobis distance or the like, what coincide with each other are set to 0, and as the difference increases, the value increases. Thus, the selecting device selects the stream corresponding to the type with the lowest similarity of the calculated similarity.

In another aspect of the reproducing apparatus of the present invention, it is further provided with a communicating device connectable to a data server for storing the plurality of streams, through a network, the controlling device judging whether or not there is the selected stream on the data server, the controlling device controlling the communicating device and the reproducing device to receive and preferentially reproduce the selected stream if it is judged that there is the selected stream.

According to this aspect, the controlling device judges whether or not there is the stream that corresponds to the information recording medium set on the reproducing apparatus and that corresponds to the type indicated by the reproducing apparatus information, on the data server which exists on the network and which is for storing the plurality of streams provided by a film maker or the like. In other words, the controlling device judges whether or not there is the stream that coincides with the stream selected by the selecting device.

Here, "corresponding to the information recording medium" means coinciding with identification information about a title and a maker of the information recording medium. Incidentally, the streams stored in the data server are typically streams including difference data provided by a maker or the like after the sale of the information recording medium. Specifically, for example, it is data for a menu with different layout or the like, subtitle data with a misprint corrected, or the like.

If it is judged that the data server has the stream that coincides with the selected stream, the controlling device controls the communicating device and the reproducing device to receive the stream from the data server and to preferentially reproduce it. In this case, the selected stream may be all received from the data server before being reproduced, or the selected stream may be reproduced while being received from the data server.

Incidentally, for example, if it is judged that it takes a predetermined time or more to receive the stream due to a large data amount of the stream or network congestion, it may be displayed that there is the stream in the data server, in order for a user to select whether or not to receive the stream.

By this, if it is connectable to the data server, it is possible to obtain the display image having the text size and the layout suitable for the reproducing apparatus and the display apparatus. In addition, for example, by obtaining the data that cannot be included in the information recording medium due to the capacity restriction of the information recording medium through the network, it is possible to increase the practical capacity of the information recording medium.

Moreover, even in the case of the existing information recording medium on which the apparatus type information is not recorded, it is possible to obtain the same effect as that of the information recording medium on which the apparatus type information is recorded, so that it is extremely useful in practice.

In this aspect, it may further provided with a memory device for storing the selected stream.

By virtue of such construction, it is unnecessary to read the stream from the data server every time, so that it is extremely useful in practice.

The memory device is typically a large-capacity memory apparatus such as a hard disk drive. The memory device may be fixed to the reproducing apparatus, or it may be removable such as a card-type hard disk drive.

Incidentally, if the plurality of streams are stored in the memory device and the capacity of the memory device is insufficient, the stream may be automatically deleted in order from the old stream. In this case, if the streams are sorted in order of the reproduction time of the information recording medium, the stream corresponding to the information recording medium reproduced many times is hardly deleted. Alternatively, the insufficiency of the capacity of the memory device may be displayed on the display device or the like, thereby allowing a user to select the stream to be deleted.

The operation and other advantages of the present invention will become more apparent from Best Mode for Carrying Out the Invention described below.

### Brief Description of Drawings

[FIG. 1] FIG. 1 is a conceptual view showing the data structure of an information recording medium in a first embodiment.
[FIG. 2] FIG. 2 is one example of a conceptual view of a stream attribute table in the first embodiment.
[FIG. 3] FIG. 3 is a block diagram showing the structure of a reproducing apparatus in the first embodiment.
[FIG. 4] FIG. 4 is a conceptual view showing the data structure of a memory in the first embodiment.
[FIG. 5] FIG. 5 is one example of a conceptual view showing a player status register in the first embodiment.
[FIG. 6] FIGs. 6 are one example of an image obtained by reproducing data included in a menu stream file in the first embodiment.
[FIG. 7] FIG. 7 is one example of a conceptual view showing a similarity judgment table in the first embodiment.
[FIG. 8] FIG. 8 is a flowchart showing the operations of the reproducing apparatus in the first embodiment.
[FIG. 9] FIG. 9 is a conceptual view showing a relation between a reproducing apparatus and a data server in a second embodiment.
[FIG. 10] FIG. 10 is a conceptual view showing the data structure of the data server in the second embodiment.
[FIG. 11] FIG. 11 is a flowchart showing the operations of the reproducing apparatus in the second embodiment.
[FIG. 12] FIG. 12 is a conceptual view showing the data structure of an information recording medium in a third embodiment.
[FIG. 13] FIG. 13 is one example of an image obtained by reproducing data included in a table data file.
[FIG. 14] FIG. 14 is a flowchart showing the operations of a reproducing apparatus in the third embodiment.

### Description of Reference Codes

- 10: network
- 100: information recording medium
- 200: display apparatus
- 300: reproducing apparatus
- 400: data server
- 1002: table data file
- 1021: stream file
- 2000: stream attribute table
- 2100: apparatus type information
- 3000: player status register
- 3100: reproducing apparatus information
- 4111: update stream file

### Best Mode for Carrying Out the Invention

Hereinafter, embodiments of the reproducing apparatus of the present invention will be described with reference to the drawings.

### <First Embodiment>

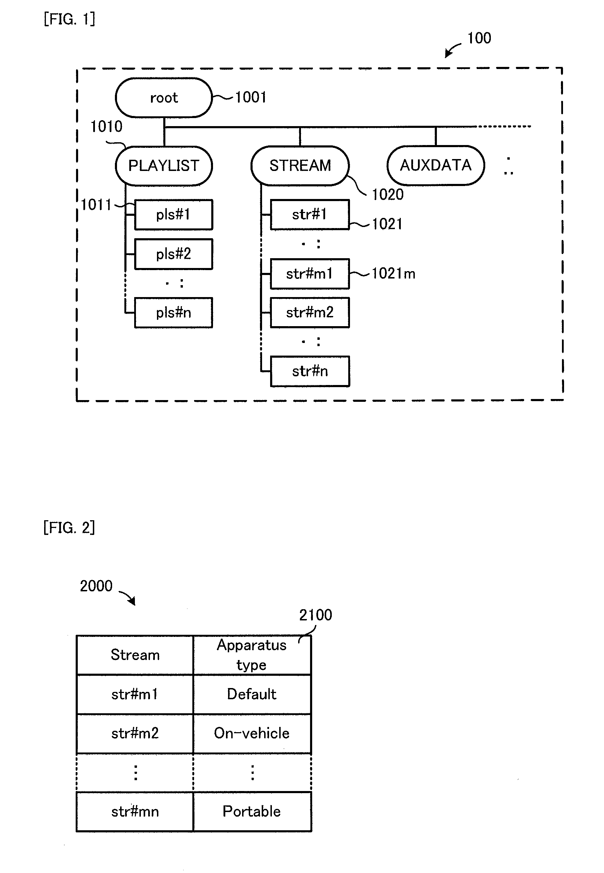

A first embodiment of the reproducing apparatus of the present invention will be described with reference to FIG. 1 to FIG. 8.

Firstly, with reference to FIG. 1, an explanation will be given on the data structure of an information recording medium reproduced by a reproducing apparatus in the embodiment. FIG. 1 is a conceptual view showing the data structure of the information recording medium in the first embodiment.

As shown in FIG. 1, in an information recording medium 100 which is, for example, a BD, a plurality of sub directories such as a reproduction list directory 1010 and a stream directory 1020 are connected under a root directory 1001. Moreover, in the plurality of sub directories, various files such as a plurality of reproduction list files 1011, a plurality of stream files including menu stream files 1021m, and the like are grouped and disposed in each type.

The reproduction list file 1011 includes a stream attribute table 2000 as shown in FIG. 2. FIG. 2 is one example of a conceptual view of a stream attribute table. The stream attribute table 2000 includes apparatus type information 2100 which indicates each of a plurality of types corresponding to respective one of the plurality of stream files. Incidentally, the stream attribute table 2000 may include a plurality of attribute information such as language information, in addition to the apparatus type information 2100.

The menu stream file 1021m includes screen structure data for determining the screen structure (e.g. layout, text size, button size, the number of options, and the like) of a menu screen according to the apparatus type information 2100.

As described above, the plurality of menu stream files 1021m each of which corresponds to respective one of a plurality of types of apparatuses and the stream attribute table 2000 for managing and identifying the plurality of menu stream files 1021m are recorded on the information recording medium 100 in the embodiment, and it is possible to provide a menu image having the text size and the layout suitable for the reproducing apparatus and a display apparatus.

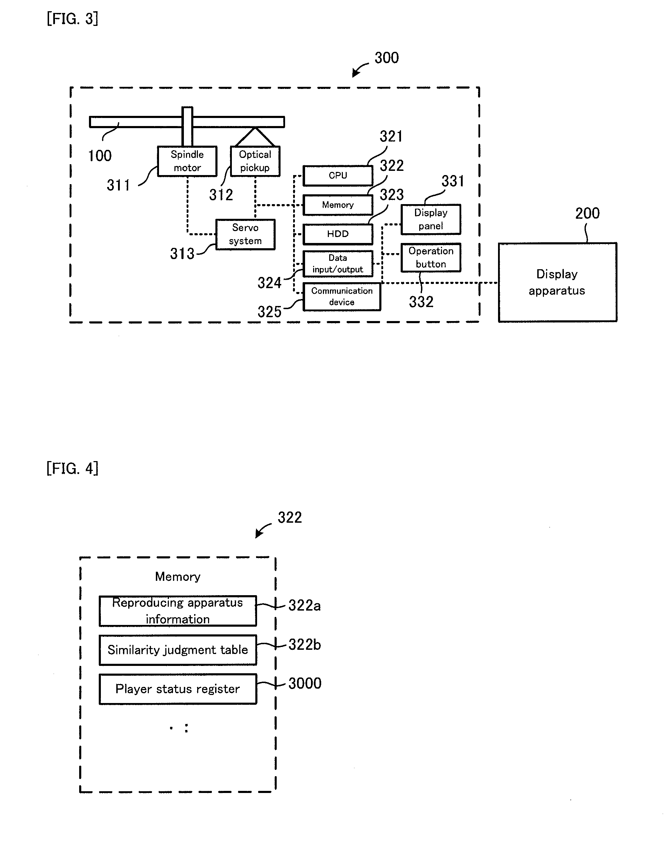

Next, the structure of the reproducing apparatus in the embodiment will be described with reference to FIG. 3. FIG. 3 is a block diagram showing the structure of a reproducing apparatus in the first embodiment.

As shown in FIG. 3, a reproducing apparatus 300 is provided with an information recording medium 100, a spindle motor 311, an optical pickup 312, a servo system 313, a CPU 321, a memory 322, a hard disk drive (HDD) 323, a data input/output control device 324, a communication device 325, a display panel 331, and an operation button 332.

Here, the "spindle motor 311", the "optical pickup 312", the "servo system 313", and the "CPU 321" in the embodiment are one example of the "reproducing device" of the present invention. Moreover, the "CPU 321" in the embodiment is also one example of the "selecting device" and the "controlling device" of the present invention. The "memory 322" and the "hard disk drive 323" in the embodiment is one example of the "storing device" and the "memory device" of the present invention, respectively.

To the reproducing apparatus 300, a display apparatus 200 such as a plasma display, a liquid crystal display, and a CRT (Cathode Ray Tube) is connected. Incidentally, the display apparatus 200 may be unified with the reproducing apparatus 300.

The communication device 325 can connect a wide area network such as the Internet through a LAN (Local Area Network) cable and a wireless communication unit having a predetermined wireless communication band.

The memory 322, as shown in FIG. 4, stores reproducing apparatus information 322a which indicates the type of the reproducing apparatus 300, a similarity judgment table 322b, a player status register 3000, and the like. Here, FIG. 4 is a conceptual view showing the data structure of the memory 322.

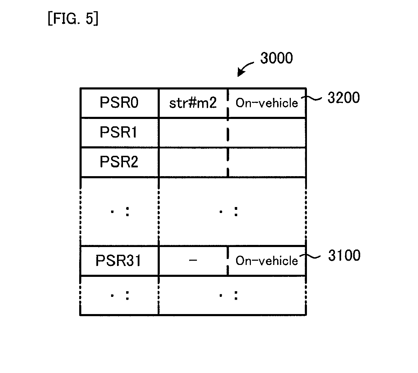

Now, with reference to FIG. 5, the player status register 3000 will be described. FIG. 5 is one example of a conceptual view showing the player status register in the first embodiment.

The player status register 3000 stores the reproduction apparatus information 322a and the apparatus type information 2100 corresponding to the reproduction apparatus information 322a of the apparatus type information 2100 recorded on the information recording medium 100 set on the reproducing apparatus 300, in the operation of the reproducing apparatus 300. The player status register 3000 has a space 3100 only for storing the reproduction apparatus information 322a and a space 3200 only for storing the apparatus type information 2100 corresponding to the reproducing apparatus information 322a.

The reproducing apparatus information 322a may be stored into the player status register 3000 every time the reproducing apparatus 300 operates (e.g. when the power supply is turned on), or it may be stored into the player status register 3000 when a user sets or updates the reproducing apparatus information 322a or in similar cases.

Simply, the reproducing apparatus information 322a only needs to have a default value which indicates one particular type peculiar to the reproducing apparatus 300. The default value in that case is stored in advance, for example, in manufacturing and in shipping, and control may be performed to reproduce a stream corresponding to the default value. However, in order to perform more advanced control detailed below, the reproducing apparatus information 322a may have a plurality of different values with respect to individual recording media.

In the operation, the reproducing apparatus 300 firstly reads the apparatus type information 2100 and the file name of the menu stream file 1021m corresponding to the apparatus type information 2100 from the stream attribute table 2000 recorded on the information recording medium 100 and temporarily stores them into the memory 322. Then, the CPU 321 judges whether or not information corresponding to the reproducing apparatus information 322a is included in the apparatus type information 2100 stored in the memory 322.

If it is judged that the information is included, the CPU 321 stores the corresponding apparatus type information 2100 into the predetermined space 3200 in the player status register 3000. Then, the CPU 321 controls the optical pickup 312 or the like to select and reproduce the menu stream file 1021m corresponding to the apparatus type information 2100 stored in the predetermined space 3200.

The data included in the reproduced menu stream file 1021m is decoded or the like by the CPU 321 and then displayed on the display apparatus 200 through the data input/output device 323.

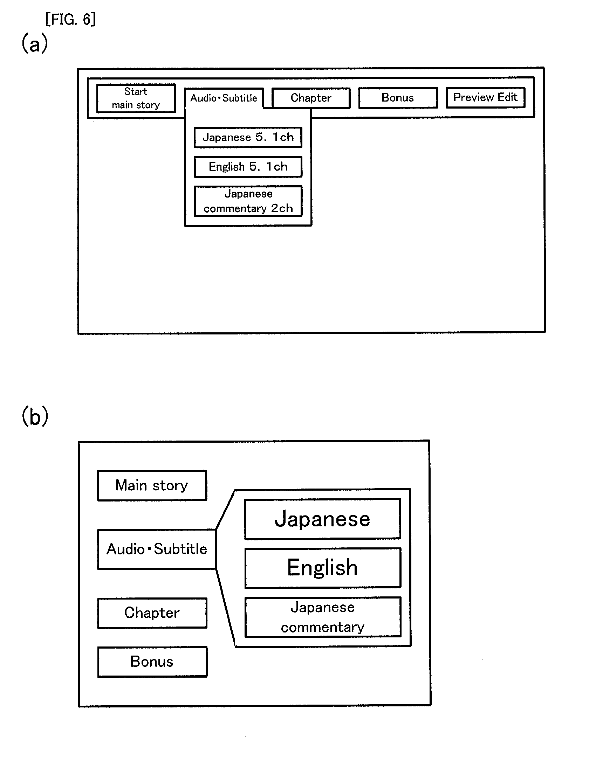

For example, if the reproducing apparatus information 3100 is a high-definition display, a relatively finely designed menu image is displayed, as shown in FIG. 6(a). Alternatively, for example, if the reproducing apparatus information 3100 is an on-vehicle player, such a menu screen is displayed that the text size and the button size are relatively largely designed, that the number of options is reduced, or that the content of the options is simplified, as shown in FIG. 6(b). FIGs. 6 are one example of an image obtained by reproducing the data included in the menu stream file 1021m.

On the other hand, if it is judged that the information corresponding to the reproducing apparatus information 322a is not included in the apparatus type information 2100 stored in the memory 322, the CPU 321 typically controls the optical pickup 312 and the like to store the default value into the predetermined space 3200 and to select and reproduce a default stream file.

By this, it is possible to automatically obtain the menu image having the text size and the layout suitable for the reproducing apparatus 300 and the display apparatus 200, thereby improving visibility and operability.

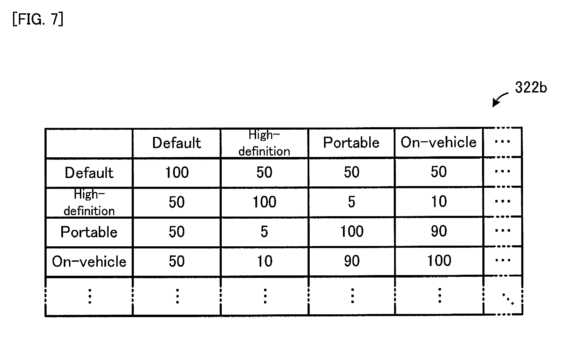

Incidentally, if a function for judging similarity is added to the reproducing apparatus 300, the apparatus type information 2100 may be determined on the basis of the judged similarity, instead of the aforementioned judgment. Specifically, for example, the CPU 321 may store the apparatus type information 2100 with the highest similarity into the predetermined space 3200 on the basis of the similarity judgment table 322b as shown in FIG. 7. Here, FIG. 7 is one example of a conceptual view showing the similarity judgment table 322b.

Incidentally, in the embodiment, what coincide with each other are set to be 100, and what have a larger difference are set to be closer to 0. In this case, by setting the default value to an intermediate value, for example, it is possible to prevent a menu screen for a high-definition display from being displayed when the reproduction is performed on an on-vehicle player.

By virtue of such construction, even if the apparatus type information 2100 which correspond with the reproducing apparatus information 322a is not included, the menu screen that can improve the visibility and the operability is displayed. On the other hand, for a maker, since it is no longer necessary to prepare the menu stream file corresponding to each of all the reproducing apparatuses, it is possible to reduce a load.

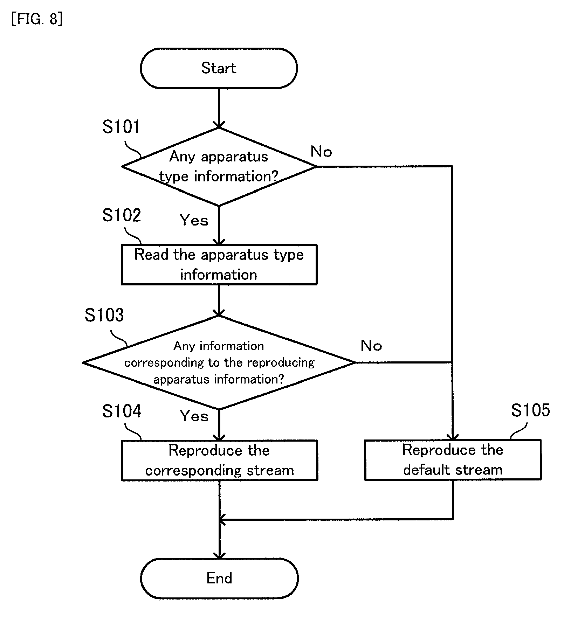

Next, the operations of the reproducing apparatus 300 constructed in the above manner will be described by using a flowchart in FIG. 8.

In FIG. 8, firstly, the CPU 321 judges whether or not the stream attribute table 2000 is recorded on the information recording medium 100 (step S101). If the stream attribute table 2000 is not recorded (the step S101: No), the optical pickup 312 or the like is controlled to reproduce the default stream file.

If it is judged that the stream attribute table 2000 is recorded (the step S101: Yes), then, the apparatus type information 2100 or the like is read and is temporarily stored into the memory 322 (step S102). Then, the CPU 321 judges whether or not information corresponding to the type indicated by the reproducing apparatus information 322a is included in the stored apparatus type information 2100 (step S103).

If it is judged that the information is not included (the step S103: No), the default value is stored into the predetermined space 3200 in the player status register 3000, and the optical pickup 312 or the like is controlled to reproduced the default stream file.

If it is judged that the information is included (the step S103: Yes), the apparatus type information 2100 corresponding to the reproducing apparatus information 322a is stored into the predetermined space 3200 in the player status register 3000, and the optical pickup 312 or the like is controlled to select and reproduced the corresponding menu stream file 1021m.

Incidentally, the reproducing apparatus 300 may be provided with, for example, a function for recording data onto a recordable information recording medium such as a BD-R (Blu-ray Disc Recordable) and a BD-RE (Blu-ray Disc Rewritable); namely, the reproducing apparatus 300 may be a recording / reproducing apparatus. In this case, in the recording of the BD-R or the BD-RE, the recording may be performed such that it has the same function as the information recording medium 100 in the embodiment by editing or adding the stream file and by recording the apparatus type information 2100.

Moreover, for example, if the apparatus type information is written into a reservation area for writing the attribute information of a menu stream, the existing BD standard is not significantly influenced, so that it is extremely useful in practice.

Incidentally, not only in a HDMV (High Definition Movie Mode) mode **characterized in that** the menu display is performed by using the stream, but also in a BD-J mode **characterized in that** the menu display is performed by the Java technology, the programming of graphic data allows the same effects to be obtained only if the apparatus type information 2100 is recorded on the information recording medium 100.

Moreover, this can be applied not only to the BD but also to a HD DVD (High-Definition Digital Versatile Disc), a DVD, and the like.

### <Second Embodiment>

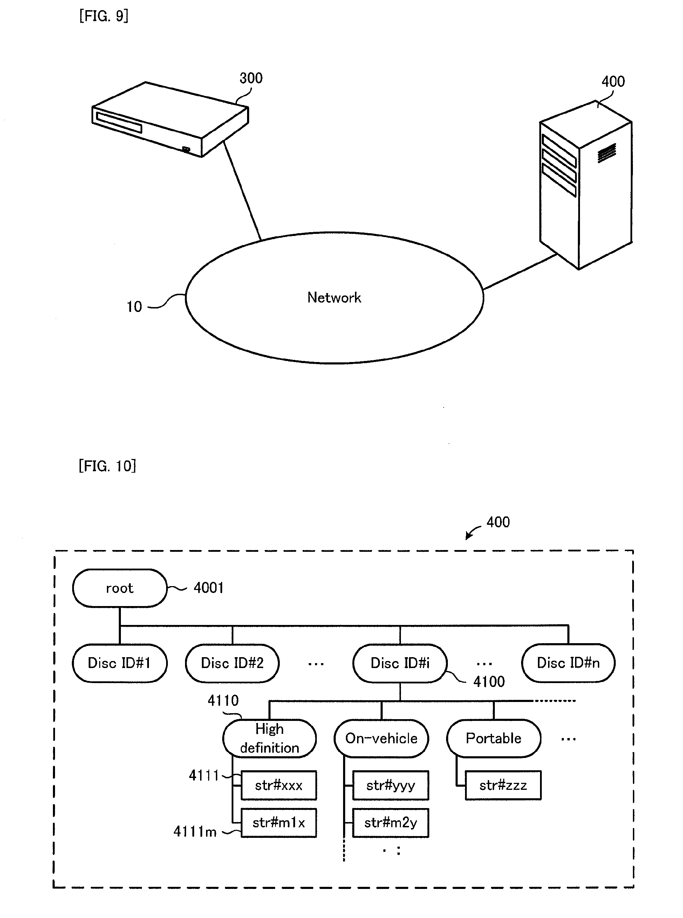

A second embodiment of the reproducing apparatus of the present invention will be described with reference to FIG. 9 to FIG. 11. The second embodiment has the same construction as the first embodiment, except that the operations of the reproducing apparatus are different. Thus, in the second embodiment, the explanation that overlaps in the first embodiment will be omitted.

As shown in FIG. 9, the reproducing apparatus 300 is connected to a data server 400 through a network 10 which is a wide area network such as the Internet. FIG. 9 is a conceptual view showing a relation between the reproducing apparatus 200 and the data server 400.

Now, with reference to FIG. 10, the data structure of the data server 400 will be described. FIG. 10 is a conceptual view showing the data structure of the data server in the second embodiment. As shown in FIG. 10, in the data server 400, a plurality of sub directories 4100 for grouping data in each information recording medium are connected under a root directory 4001. Moreover, under the plurality of first sub directories 4100, a plurality of second sub directories 4110 for grouping a stream file 4111 including a menu stream file 4111m in each apparatus type are connected.

In the operation, the reproducing apparatus 300 firstly reads medium identification information, such as a title, about the information recording medium 100, and it transmits a signal which indicates the medium identification information and the reproducing apparatus information 322a to the data server 400 through the network 10.

Next, the signal which indicates whether or not there is the menu stream file 4111m from the data server 400 corresponding to the medium identification information and corresponding to the type indicated by the reproducing apparatus information 322a is received. If there is the corresponding menu stream file 4111m, the corresponding menu stream file 4111m is received from the data server 400 and is stored into the hard disk drive 323, and the player status register 3000 is updated. Then, the CPU 321 preferentially reproduces the corresponding menu stream 4111m.

By this, even if the menu stream 1021m corresponding to the type indicated by the reproducing apparatus information 322a is not recorded on the information recording medium 100, if there is the corresponding menu stream 4111m on the data server 400, it is possible to automatically obtain the menu image suitable for the reproducing apparatus 300 and the display apparatus 200, thereby improving the visibility and the operability.

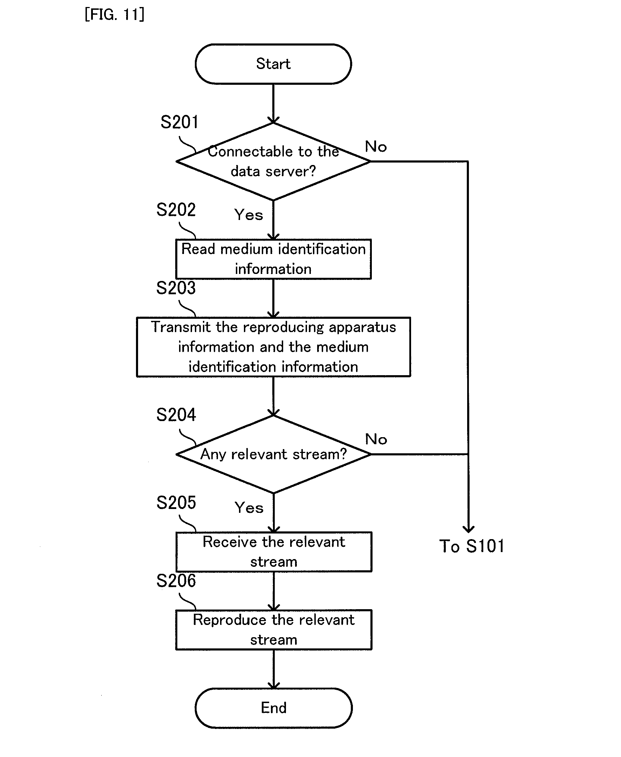

Next, the operations of the reproducing apparatus 300 constructed in the above manner will be described by using a flowchart in FIG. 11.

In FIG. 11, firstly, the CPU 321 judges whether or not it is connectable to the data server 400 through the network 10 (step S201). If it is not connectable to the data server 400 (the step S201: No), the processes from the step S101 shown in FIG. 8 are performed.

If it is connectable to the data server 400 (the step S201: Yes), the CPU 321 controls the optical pickup or the like to read the medium identification information about the information recording medium 100 (step S202). Then, the signal which indicates the medium identification information and the reproducing apparatus information 322a is transmitted to the data server 400 through the network 10 (step S203).

Then, the signal is received which indicates whether or not there is the menu stream file 4111m from the data server 400 corresponding to the medium identification information and the type indicated by the reproducing apparatus information 322a (step S204). If there is the corresponding menu stream file 4111m (the step S204: Yes), the corresponding menu stream file 4111m is received from the data server 400 (step S205), and the received corresponding menu stream file 4111m is reproduced (step S206).

On the other hand, if there is not the corresponding menu stream file 4111m (the step S204: No), the processes from the step S101 shown in FIG. 8 are performed.

Incidentally, if the reproducing apparatus 300 is provided with, for example, a USB (Universal Serial Bus) terminal or the like corresponding to a removable memory device such as a card-type nonvolatile memory and a hard disk drive, the menu stream file 4111m suitable for the reproducing apparatus 300 or the like may be stored into the removable memory device in advance by using an apparatus different from the reproducing apparatus such as a personal computer, and the menu stream file 4111m may be read from the memory device.

### <Third Embodiment>

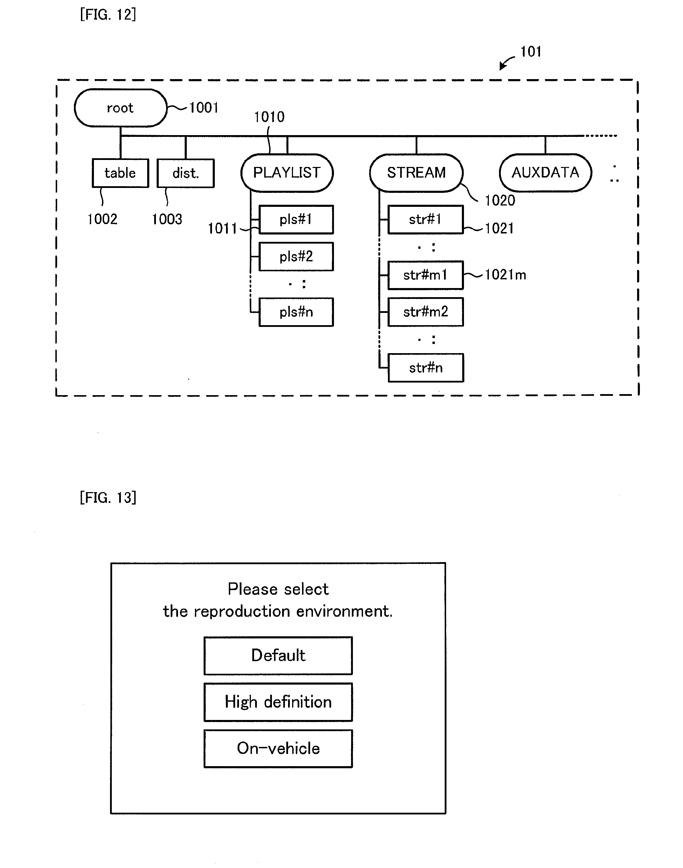

A third embodiment of the reproducing apparatus of the present invention will be described with reference to FIG. 12 to FIG. 14. The third embodiment has the same construction as the first embodiment, except that the data structure of the information recording medium is different. Thus, in the third embodiment, the explanation that overlaps in the first embodiment will be omitted, and the common points in the drawings will be indicated with the same referential numerals. What is basically different will be only explained with reference to FIG. 12 to FIG. 14. FIG. 12 is a conceptual view showing the data structure of an information recording medium in the third embodiment, in a similar way to FIG. 1.

As shown in FIG. 12, in an information recording medium 101, there are disposed a table data file 1002 and a judgment program data file 1003 in a root directory 1001, wherein the table data file 1002 is one example of the "data for displaying the apparatus type information as a list" of the present invention, and the judgment program data file 1003 for judging whether or not the reproducing apparatus 300, which reproduces information on the information recording medium 101, has a function of automatically selecting the suitable menu stream file 1021m on the basis of the apparatus type information 2100. The judgment program data file 1003 is recorded such that it is firstly read when the information recording medium 101 is set on the reproducing apparatus 300.

In the operation, the reproducing apparatus 300 firstly reads the judgment program data file 1003 and executes a judgment program. If the reproducing apparatus 300 has the aforementioned function, the menu image suitable for the reproducing apparatus 300 or the like is displayed under the condition that the information recording medium 101 has the menu stream file 1021m suitable for the reproducing apparatus 300.

On the other hand, if the reproducing apparatus 300 does not have the aforementioned function, then, the reproducing apparatus 300 reads the table data file 1002 and displays an image as shown in FIG. 13. FIG. 13 is one example of the image obtained by reproducing the data included in the table data file 1002.

By this, in the case of the reproducing apparatus 300 that has the aforementioned function, it is possible to automatically obtain the menu image suitable for the reproducing apparatus 300 or the like, thereby improving the visibility and the operability. On the other hand, even in the case of the reproducing apparatus 300 that does not have the aforementioned function, by displaying the image as shown in FIG. 13, a user can select the menu image suitable for the reproducing apparatus 300 or the like, thereby improving the visibility and the operability.

If the user manually selects the menu image, the medium identification information about the information recording medium 101 may be recorded into the memory 322. In this manner, the next time the same information recording medium 101 is set on the reproducing apparatus 300, it is possible to automatically display the previously selected menu image.

Incidentally, if the judgment program data file 1003 is not recorded on the information recording medium 101, the table data file 1002 is recorded such that it is firstly read.

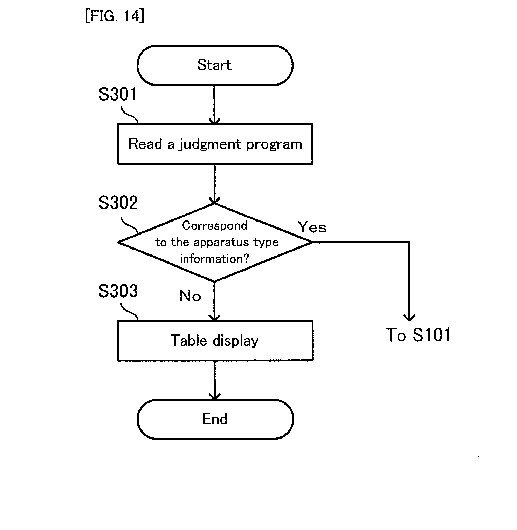

Next, the operations of the reproducing apparatus 300 constructed in the above manner will be described by using FIG. 14.

In FIG. 14, firstly, the CPU 321 controls the optical pickup or the like to read the judgment program data file 1002 from the information recording medium 101 (step S301), and it judges whether or not the reproducing apparatus 300 has a function of automatically selecting the suitable menu stream file 1021m on the basis of the apparatus type information 2100 (step S302).

If it is judged that the reproducing apparatus 300 has the function (the step S302: Yes), the processes from the step S101 shown in FIG. 8 are performed. If it is judged that the reproducing apparatus 300 does not have the function (the step S302: No), then, the CPU 321 controls the optical pickup or the like to read the table data file 1002 and display the image shown in FIG. 13 (step S303).

Incidentally, the present invention is not limited to the aforementioned embodiments, but various changes may be made, if desired, without departing from the essence or spirit of the invention which can be read from the claims and the entire specification. An information recording medium and a reproducing apparatus, all of which involve such changes, are also intended to be within the technical scope of the present invention.

## Claims

1. An information recording medium on which there are recorded:
a plurality of streams each of which corresponds to respective one of a plurality of types of apparatuses and each of which comprises data for displaying one of pictures about identical content; and
apparatus type information which indicates each of the types of the apparatuses corresponding to respective one of the plurality of streams.

2. The information recording medium according to claim 1, wherein each of the plurality of streams is a menu stream.

3. The information recording medium according to claim 2, wherein
the menu stream includes screen structure data for determining a screen structure of a menu screen, and
the screen structure data corresponds to the apparatus type information associated with the menu stream.

4. The information recording medium according to claim 1, wherein data for displaying the apparatus type information as a list is further recorded.

5. The information recording medium according to claim 1, wherein the apparatus type information at least includes information which indicates an on-vehicle player.

6. An information recording medium on which there are recorded:
a stream which comprises data for displaying a main picture;
a plurality of streams each of which corresponds to respective one of a plurality of types of apparatuses and each of which comprises data for displaying one of sub-pictures about the main picture; and
apparatus type information which indicates each of the types of the apparatuses corresponding to respective one of the plurality of streams.

7. A reproducing apparatus for performing reproduction on an information recording medium on which there are recorded: a plurality of streams each of which corresponds to respective one of a plurality of types of apparatuses and each of which comprises data for displaying one of pictures about identical content; and apparatus type information which indicates each of the types of the apparatuses corresponding to respective one of the plurality of streams, said reproducing apparatus comprising:
a storing device for storing reproducing apparatus information which indicates the type of said reproducing apparatus;
a reproducing device for reproducing the apparatus type information from the information recording medium;
a selecting device for selecting the stream corresponding to the type indicated by the stored reproducing apparatus information of the plurality of types, with reference to the reproduced apparatus type information; and
a controlling device for controlling said reproducing device to reproduce the selected stream.

8. The reproducing apparatus according to claim 7, wherein
said selecting device includes a similarity calculating device for calculating similarity which indicates how similar the plurality of types and the type indicated by the stored reproducing apparatus information are to each other, and
said selecting device selects the stream corresponding to the type having the highest similarity of the calculated similarity.

9. The reproducing apparatus according to claim 7, further comprising a communicating device connectable to a data server for storing the plurality of streams, through a network,
said controlling device judging whether or not there is the selected stream on the data server, said controlling device controlling said communicating device and said reproducing device to receive and preferentially reproduce the selected stream if it is judged that there is the selected stream.

10. The reproducing apparatus according to claim 9, further comprising a memory device for storing the selected stream.
